# EUROPEAN PATENT APPLICATION

(11) **EP 3 072 852 A1**
(43) Date of publication of application: **28.09.2016**
(21) Application number: 15020049.1
(22) Date of filing: 27.03.2015
(51) Int. Cl.: C01B 31/04, B82Y 30/00, B82Y 40/00

(54) **METHOD OF PRODUCING GRAPHENE**

(71) Applicant: Tata Steel UK Ltd, London SW1P 4WY (GB)
(72) Inventor: PATOLE, Samson, 1970 CA IJmuiden (NL); GRAHAM, Kevin Victor, 1970 CA IJmuiden (NL); BÖHM, Sivasambu, 1970 CA IJmuiden (NL); SHIVAREDDY, Sai, 1970 CA IJmuiden (NL)
(74) Representative: Blauw, Frans Gerard

(57) **Abstract**

The invention relates to a method for producing graphene, wherein a suspension of a graphene precursor in a liquid is subjected to a mechanical treatment and wherein the mechanical treatment comprises exerting a shear force on the graphene precursor by guiding the suspension under pressure through a nozzle.

## Description

### Field of the invention

The invention relates to a method of producing graphene from a graphene precursor using mechanical treatment of the graphene precursor.

### Background of the invention

There are several ways to produce graphene which are basically either along a bottom-up route or a top-down route. Examples of the bottom-up route are the production of graphene by Chemical Vapour Deposition (CVD) and epitaxial growth of graphene on a substrate for example on a Si-C substrate.

With the methods if the bottom-up route it is possible to produce high quality graphene, meaning that the graphene is deposited or grown directly on the substrate layer by layer by subjecting the substrate to a chemical treatment. The drawbacks of these methods are that these are expensive and time consuming and that specific process conditions are required such as high vacuum chambers and/or high process temperatures. A further drawback is that some of the gaseous by-products of these methods are toxic.

The top-down route is basically the exfoliation of a graphene precursor, wherein the graphene precursor comprises natural graphite or synthetic graphite. The exfoliation method comprises chemical treatment of the graphene precursor, which often include toxic chemicals. In this method the graphene precursor is first treated with strong oxidants resulting in the forming of graphene oxide. Graphene oxide can be dispersed easily in solvents, including water, and is subsequently subjected to a reducing step by treating the graphene oxide again with chemicals, for instance with hydrazine.

With the exfoliation method also mechanical treatment steps are used next to the chemical treatment, such as milling and sonication of the solution containing graphene oxide. These mechanical treatment steps are often continued for considerable time in order to get sufficient yield, which will result in a reduction in the size of the graphene flakes, a critical parameter in several applications of graphene. Further, it may also give rise to broken-conjugation areas in graphene, so-called graphene atomic- or point-defects, which will affect the electronic properties of graphene.

These mechanical treatment steps are often continued for considerable time giving rise to increase in temperature which may have a negative effect on the quality of the graphene produced.

This exfoliation method requires a number of subsequent processing steps which makes this also a time consuming method. If such a method is to be carried out on an industrial scale the amount of chemicals needed would be substantial, requiring adequate safety and environmental measures. The quality of the graphene resulting from this exfoliation method is substantially less than the quality of the graphene resulting from the method according to the bottom-up route.

### Objectives of the invention

It is an objective of the present invention to provide a method of producing graphene by applying a mechanical treatment of a graphene precursor.

It is another objective of the present invention to provide a method of producing graphene wherein graphene is produced instantaneously.

It is another objective of the present invention to provide a method of producing graphene wherein the resulting graphene has a high content of single layer graphene or stacked graphene layers of 3 layers or less.

It is another objective of the present invention to provide a method of producing graphene with a high yield.

It is another objective of the present invention to provide a method of producing graphene wherein the graphene is produced against low costs.

It is still another objective of the present invention to provide a method of producing graphene which is free from using corrosive and/or toxic chemicals.

### Description of the invention

According to a first aspect of the invention one or more of the objectives of the invention are realized by providing a method for producing graphene, which comprises the steps of:
- dispersing a graphene precursor in a liquid to create a suspension of the graphene precursor in the liquid,
- subjecting the suspension of the graphene precursor in the liquid to a mechanical treatment,
- separating graphene from the suspension,
wherein the mechanical treatment comprises that the graphene precursor suspended in the liquid is subjected to a shear force by guiding the suspension under pressure through a nozzle.

In the context of the present invention the term "graphene precursor" shall mean a solution or compound comprising natural graphite or synthetic graphite. In the context of the present invention the term "graphene" shall refer to single layer graphene as well as to multilayer stacks of graphene comprising 20 layers or less of graphene, unless indicated differently.

It was found that the graphene precursor could be subjected to a high shear force by feeding or spraying the liquid with the suspended graphene precursor under high pressure through a small opening.

According to a further aspect of the invention the pressure with which the graphene precursor is fed through the nozzle is in the range of 2000 - 25000 kPa and preferably in the range of 10000 - 20000 kPa.

Good results in the exfoliation of the graphene precursor were obtained with nozzle openings with a size in the range of 100 - 500 µm and preferably in the range of 100 - 300 µm.

According to a further aspect of the invention the nozzle opening is a rectangular opening which effectively contributes in exerting high shear forces on the graphene precursor when forced through the nozzle.

To further improve the yield of the method it is provided that the graphene precursor is subjected to a further mechanical treatment. The graphene precursor is either subjected to the further mechanical treatment before the suspension is guided under pressure through the nozzle or the graphene precursor in suspension is subjected to the further mechanical treatment before the suspension is put under pressure.

Such a further mechanical treatment is a milling operation, a mixing operation or a sonication operation or a combination of at least two of these operations.
Preferably the sonication operation is a ultrasonication operation, wherein the liquid with the graphene precursor in suspension is subjected to ultrasonic waves of 20 kHz and more. The sound waves propagating through the liquid generate compression and rarefaction cycles, the rarefaction creating voids which collapse during compression. With the invention the ultrasonication is in the range of 30 - 60 kHz, more preferably in the range of 40 -50 kHz.

According to a further aspect of the invention the graphene precursor suspended in the liquid is subjected more than once to a shear force by guiding the suspension at least two times under pressure through a nozzle. This can be done rather easily by returning the suspension leaving the nozzle directly to the supply side of the device used to apply the method. The suspension could in this manner also be subjected to any further mechanical treatments.
The method according to the invention is very suitable to be applied as a continuous or semi-continuous process.

According to a further aspect a surfactant is added to the liquid with the graphene precursor. Preferably the liquid is water and the surfactant is a water soluble surfactant. The surfactant is for instance a tetra butyl ammonium surfactant or an alkylol ammonium surfactant. The surfactant is added in a concentration of 0.1 - 10.0 mg/ml, preferably 0.2 - 5.0 mg/ml. Good results were obtained with ANTI-TERRA^{®}-250, a solution of an alkylol ammonium salt of a higher molecular weight acidic polymer, a surfactant supplied by BYK Chemie GmbH.

The invention also provides for a device to apply the method, wherein the device comprises a first container for a suspension of a graphene precursor in a liquid, a pump connected to the first container, a nozzle connected to the pump and a second container to receive the suspension that has passed through the nozzle. If the high shear force treatment is to be repeated the first container could be used instead of the first container to receive the suspension to go through a further cycle of mechanical treatment.

According to a further aspect of the invention the pump is an airless pump used for airless spraying. With these pump liquids can be sprayed under higher pressure than with ordinary spraying systems.

### Brief description of the drawings

The invention will be further explained on hand of the example shown in the drawing, in which
fig.1 shows schematically a device to apply the method for producing graphene,
fig.2 shows a Raman diagram of the produced graphene,
fig.3 shows a first TEM image (78000x magnification) image of the produced graphene, and
fig.4 shows a second TEM image (29000x magnification) image of the produced graphene.

### Detailed description of the drawings

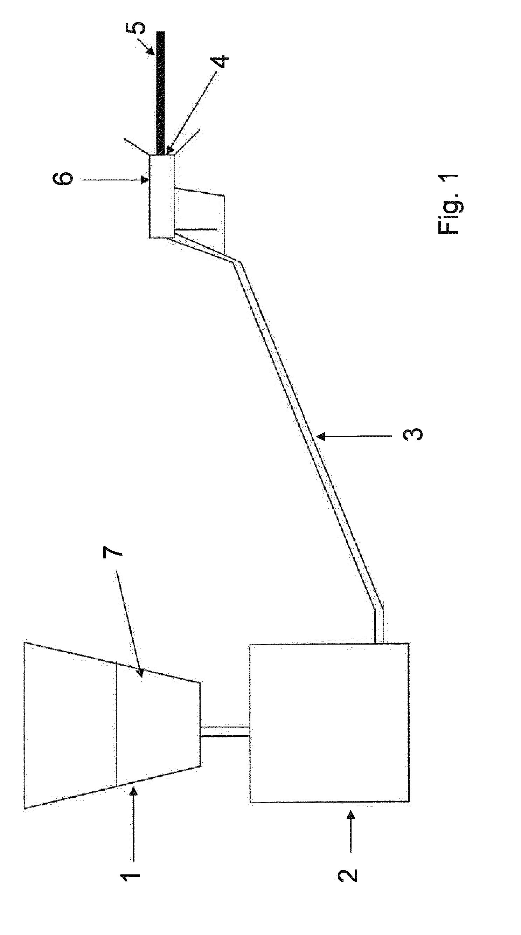

In fig.1 a device is shown to apply the method according the invention, which has a first container 1 to receive a liquid 7 in which the graphene precursor is suspended. The liquid is for instance water and a water soluble surfactant. Container 1 is connected to an airless pump 2 as used in airless spraying systems. A high pressure spray gun 6 is connected by means of a high pressure hose 3 to airless pump 2. The high pressure gun 6 has a control valve to open and shut off the gun, which for this purpose could be operated by means of a control programme. High pressure gun 6 is provided with a nozzle 4 through which the liquid leaves the high pressure gun in a spray 5. Nozzle 4 is shaped such that a high shear force is exerted on the suspended graphene precursor when forced under pressure through nozzle 4.

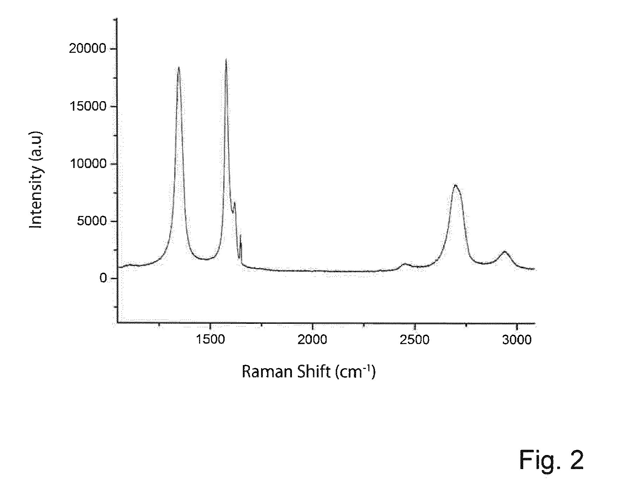

In fig. 2 a Raman spectrum is shown of a graphene sample obtained by the method according to the invention. Results from 12 spectra at 4 different points. The Raman measurements were performed at room temperature with a Renishaw spectrometer at 514nm, with notch filters cutting at 100 cm⁻¹. The vertical axis shows the intensity of the scattered Raman signal and the horizontal axis shows the Raman shift in cm⁻¹ when excited by a laser radiation with a wavelength of 514 nm.
Graphene related principle peaks the D, G and 2D peaks at 1350 cm⁻¹, 1580 cm⁻¹ and 2700 cm⁻¹ were observed. An almost symmetrical 2D peak centred at 2696 cm⁻¹ indicates that the synthesized material contains a high content of few layer graphene (less than 5 layers)

Prior to the characterization of the material by Raman spectroscopy or electron microscopy the material was dispersed in water to obtain a concentration of 2mg/ml. This dispersed solution was then centrifuged at 10000 rpm for 1hr which resulted into separation of graphene in supernatant from graphene precursor. The supernatant was collected and then drop casted on silicon/silicon dioxide substrates and left to dry on a hot plate.

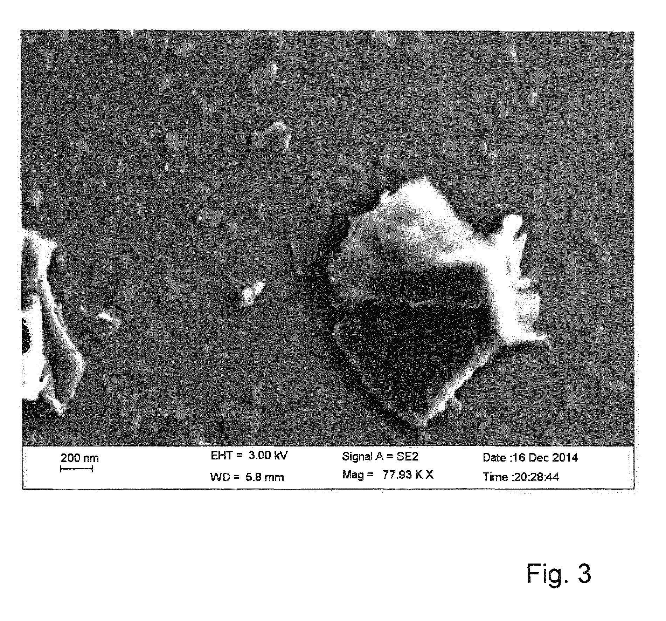

In fig.3 a high magnification scanning electron micrograph is shown of the graphene material obtained by the method according to the invention. The magnification shown in the image is about 78000 times the original size of the specimen. The acceleration voltage is kept to 3kV and the working distance at 5.8mm with a secondary electron detector collecting the scattered electron signal at an angle to the incident electron beam path. The sizes of graphene flakes in a range from 20nm to 1000nm correspond to few layer graphene (less than 5 layers), which was confirmed with RAMAN measured at the same spot.

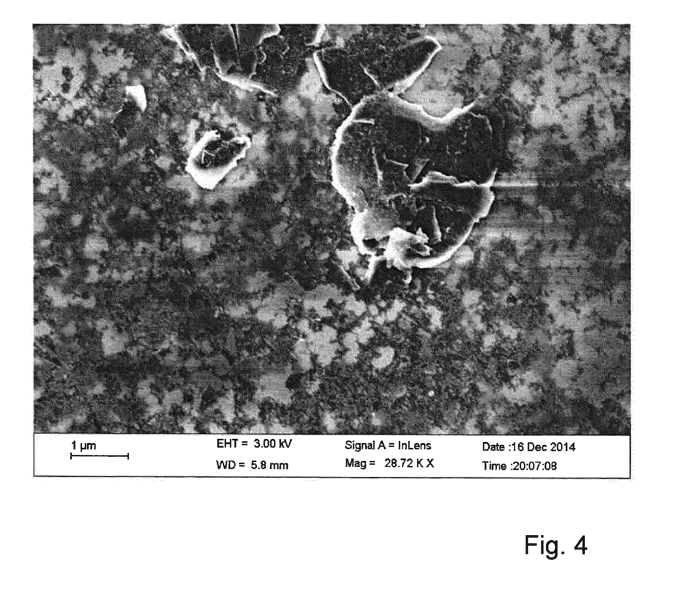

In fig.4 a lower magnification scanning electron micrograph is shown of the graphene sample, magnification is about 29000. The scattered electron signal is collected by a detector in the lens of the instrument which is aligned within the plane parallel to the electron beam.

By positioning the detector within the plane parallel to electron beam it was possible to get better contrast of graphene consisting of a few layers on the silicon dioxide substrate. The areas with a darker contrast correspond to graphene layers. There are also larger graphene flakes seen in the image, these are either flakes with larger dimensions or groups of agglomerated graphene flakes.

## Claims

1. Method for producing graphene, which comprises the steps of:
- dispersing a graphene precursor in a liquid to create a suspension of the graphene precursor in the liquid,
- subjecting the suspension of the graphene precursor in the liquid to a mechanical treatment,
- separating graphene from the suspension,
wherein the mechanical treatment comprises that the graphene precursor suspended in the liquid is subjected to a shear force by guiding the suspension under pressure through a nozzle.

2. Method according to claim 1, wherein the pressure is in the range of 2000 - 25000 kPa and preferably in the range of 10000 - 20000 kPa.

3. Method according to claim 1 or 2, wherein the size of the nozzle opening is in the range of 100 - 500 µm and preferably in the range of 100 - 300 µm.

4. Method according to claim 4, wherein the nozzle opening is a rectangular opening.

5. Method according to any of the preceding claims, wherein the graphene precursor is subjected to a further mechanical treatment.

6. Method according to claim 5, wherein the graphene precursor is subjected to the further mechanical treatment before the suspension is guided under pressure through the nozzle.

7. Method according to claim 5, wherein the graphene precursor is subjected to the further mechanical treatment before the suspension is put under pressure.

8. Method according to claim 5, wherein the further mechanical treatment is a milling operation, mixing operation or a sonication operation or a combination of at least two of these operations.

9. Method according to claim 8, wherein the sonication operation is a ultrasonication operation.

10. Method according to any of the preceding claims, wherein the graphene precursor suspended in the liquid is subjected more than once to a shear force by guiding the suspension at least two times under pressure through a nozzle.

11. Method according to any of the preceding claims, wherein a surfactant is added to the liquid with the graphene precursor.

12. Method according to any of the preceding claims, wherein the method is applied as a continuous or semi-continuous process.

13. Method according to claim 11, wherein the liquid is water and the surfactant is a water soluble surfactant.

14. Method according to claim 13, wherein the surfactant is a tetra butyl ammonium surfactant or an alkylol ammonium surfactant.

15. Method according to claim 14, wherein the surfactant is added in a concentration of 0.1 - 10.0 mg/ml, preferably 0.2 - 5.0 mg/ml.

16. Device to apply the method according to any of the preceding claims, wherein the device comprises a first container for a suspension of a graphene precursor in a liquid and, a pump connected to the first container, a nozzle connected to the pump and a second container to receive the suspension that has passed through the nozzle.

17. Device according to claim 16, wherein the pump is an airless pump.
